**Europäisches Patentamt**

**European Patent Office**

**Office européen des brevets**

(19)

(11) Veröffentlichungsnummer: **0 071 813**
**B1**

(12) **EUROPÄISCHE PATENTSCHRIFT**

(45) Veröffentlichungstag der Patentschrift:
**24.09.86**

(21) Anmeldenummer: **82106495.3**

(22) Anmeldetag: **19.07.82**

(51) Int. Cl.⁴: **C 08 F 8/30,** C 08 F 220/36,
C 08 F 220/32, C 09 D 3/48,
B 05 D 3/02

(54) **Kunstharz.**

(30) Priorität: **01.08.81 DE 3130545**

(43) Veröffentlichungstag der Anmeldung:
**16.02.83 Patentblatt 83/7**

(45) Bekanntmachung des Hinweises auf die Patenterteilung:
**24.09.86 Patentblatt 86/39**

(84) Benannte Vertragsstaaten:
**AT BE CH DE FR GB IT LI NL SE**

(56) Entgegenhaltungen:
**DE-A-1 957 483**
**DE-A-2 225 958**

(73) Patentinhaber: **BASF Lacke + Farben
Aktiengesellschaft, Max- Winkelmann- Strasse 80,
D-4400 Münster (DE)**

(72) Erfinder: **Geist, Michael, Dipl.- Chem.,
Rubensstrasse 251, D-4400 Münster (DE)**

(74) Vertreter: **Habbel, Hans- Georg, Dipl.- Ing.,
Postfach 3429 Am Kanonengraben 11, D-4400
Münster (DE)**

## Beschreibung

Die Erfindung betrifft ein Kunstharz auf der Basis eines epoxidgruppenhaltigem Acrylatcopolymerisats mit einer zahlenmittleren Molmasse von 1000 bis 30 000.

Aus den USA-Patentschriften 2 604 463 und 3 297 621 sind Einbrennlacke auf der Basis der Glycidylester der Acrylsäure bzw. Methacrylsäure bekannt.

Epoxidgruppenhaltige Acrylatcopolymerisate sind auch aus der deutschen Offenlegungsschrift 2 064 916 bekannt. Diese bekannten Copolymerisate werden beim Einbrennen unter Verwendung von Härtern gehärtet. Als Härter sind Polycarbonsäuren, Polyanhydride und Polyamine bekannt.

Aus der DE-OS 2 225 958 sind epoxidgruppenhaltige Acrylatcopolymerisate bekannt, die mit Polycarbonsäuren und/oder Polycarbonsäureanhydriden und blockierten Polysocyanaten gehärtet werden. Bei diesem Bindemittelsystem liegen nach dem Einbrennen Urethanbindungen vor, die durch Reaktion der aus Epoxidgruppen mit Polycarbonsäuren bzw. Polycarbonsäureanhydriden gebildeten Hydroxylgruppen mit den entblockten Isocyanatgruppen zustande kommen. Es handelt sich bei den aus der DE-OS 22 25 958 bekannten Systeme um fremdvernetzende Systeme, die gegenüber selbstvernetzenden Systemen erhebliche Nachteile aufweisen.

Diese bestehen u.a. darin, daß Bindelmittel und Vernetzer verträglich sein müssen.

Es ist Aufgabe der Erfindung, ein Kunstharz der eingangs genannten Art zu schaffen, das ohne einen zusätzlichen Härter gehärtet werden kann, d.h. selbstvernetzend ist.

Diese Aufgabe wird erfindungsgemäß dadurch gelöst, daß

- das Acrylatcopolymerisat aus

a) 20 bis 90 Gew.-% Acrylsäurealkylester mit 1 bis 18 Kohlenstoffatomen im Alkylrest und/oder Methacrylsäureester mit 1 bis 20 Kohlenstoffatomen im Alkylrest,

b) 5 bis 40 Gew.-% eines Acrylsäurehydroxyalkylund/oder Methacrylsäurehydroxyalkylesters und

c) 5 bis 40 Gew.-% Acrylsäure- und/oder Methacrylsäureglycidylester und/oder einer anderen, eine Epoxidgruppe tragenden, olefinisch ungesättigten, polymerisierbaren Verbindung besteht, wobei die Summe der Komponenten a, b und c 100 % beträgt, und

- die Hydroxylgruppen des Acrylatcopolymerisats vor oder nach Durchführung der Copolymerisation mindestens teilweise mit den freien Isocyanatgruppen eines teilblockierten Di- und/oder Polyisocyanats mit im Mittel mindestens einer freien Isocyanatgruppe und im Mittel mindestens einer blockierten Isocyanatgruppe pro Molekul umgesetzt worden sind.

Als Komponente a werden bevorzugt folgende Acrylsäureester eingesetzt:

Acrylsäuremethylester, Acrylsäureethylester, Acrylsäure-n-propylesrer, Acrylsäureisopropylesters, Acrylsäurebutylester, Acrylsäure-2-ethylhexylester, Acrylsäurecyclohexylester.

Als Komponente a bevorzugte Methacrylsäureester sind:

Methacrylsäuremethylester, Methacrylsäureethylester, Methacrylsäure-n-propylester, Methacrylsäureisopropylester, Methacrylsäure-n-butylester, Methacrylsäureisobutylester, Methacrylsäure-2-äthylhexylester, Methacrylsäurecyclohexylester.

Geeignete Acrylsäurehydroxyalkylester sind insbesondere:

Hydroxyethylücrylat, Hydroxy-n-propylacrylat, Hydroxyisopropylacrylat und Hydroxy-n-butylacrylat.

Bevorzugte Methacrylsäurehydroxyalkylester sind insbesondere Hydroxyethylmethacrylat, Hydroxy-n-propylmethacrylat, Hydroxyisopropylmethacrylat und Hydroxynbutylmethacrylat.

Neben Acrylsäure- und Methacrylsäureglycidylester können als epoxidgruppenhaltige Monomere auch andere, mindestens eine Epoxidgruppe tragende, olefinisch ungesättigte, polymerisierbare Verbindungen eingesetzt werden. Geeignet sind beispielsweise Umsetzungsprodukte aus äquimolaren Mengen Acryl- bzw. Methacrylsäure und Diepoxidverbindungen, wie z.B. Neopentylglykoldiglycidylester. Auch Umsetzungsprodukte aus hydroxylgruppenhaltigen, polymerisierbaren Monomeren, wie z.B. Hydroxyethylacrylat und Diepoxiden sind als epoxidgruppenhaltige Monomerkomponente zur Herstellung des Acrylatcopolymerisats geeignet.

Vorteilhaft enthält das Acrylatcopolymerisat als Komponente d 0,1 bis 35 Gew.-%, bezogen auf die Summe der Komponenten a, b und c, einer copolymerisierbaren Vinylverbindung.

Das Acrylatcopolymerisat enthält Hydroxylgruppen aus der Komponente d. Bei dem erfindungsgemäßen Kunstharz sind diese Hydroxylgruppen mindestens teilweise mit dem freien Isocyanatgruppen eines teilblockierten Di- und/ oder Polyisocyanats umgesetzt worden. Vorzugsweise ist etwa die Hälfte der Isocyanatgruppen blockiert.

Als Diisocyanate eignen sich hierfür aliphatische Verbindungen, wie Hexamethylendiisocyanat. Besonders geeignet sind solche mit unterschiedlich reaktiven Isocyanatgruppen, wie Isophorondiisocyanat, als auch aromatische Diisocyanate, wie Diisocyanatodiphenylmethan, und besonders solche mit unterschiedlich reaktiven Isocyanatgruppen wie Toluylendiisocyanat. Die Teilblockierung kann nach bekanntem Verfahren durchgeführt werden. So eignen sich hierfür Verbindungen wie Phenol, o-Cresol, ε-Caprolactam, Ethylhexanol, Hexylglykol und andere C-H-acide Verbindungen wie Acetylaceton, Acetessigsäure-ethylester, Malonsäurediethylester oder Mercaptane, wie Arylmercaptane oder Alkylmercaptane.

Die Umsetzung von hydroxylgruppenhaltigen Polymerisaten mit teilblockierten Di- oder Polyisocyanaten ist an sich bekannt. Sie wird beispielsweise in der US-PS 3 939 051 beschrieben.

Die teilblockierten Di- oder Polyisocyanate weisen einerseits im Mittel mindestens eine freie Isocyanatgruppe pro Molekül auf, und andererseits ist im Mittel mindestens eine Isocyanatgruppe pro Molekül mit dem Blockierungsmittel umgesetzt worden. Das Blockierungsmittel wird dabei so gewählt, daß es bei Raumtemperatur eine Reaktion der blockierten Isocyanatgruppen verhindert und bei erhöhter Temperatur abgespalten wird, so daß die Isocyanatgruppe reaktionsfähig wird. Das erfindungsgemäße Kunstharz ist daher bei Raumtemperatur stabil, während die bei erhöhter Temperatur, d.h. beim Einbrennen, freigesetzten Isocyanatgruppen zur Vernetzung des Kunstharzes zur Verfügung stehen. So können dann mit den aus der Komponente c stammenden Epoxidgruppen des Acrylatcopolymerisats unter Bildung von Oxazolidinonringen reagieren. Das erfindungsgemäße Kunstharz ist also selbstvernetzend und benötigt keine zusätzliche Härterkomponente.

Die Umsetzung der Hydroxylgruppen mit dem teilblockierten Di- und/oder Polyisocyanat kann bereits vor der Copolymerisation der Komponenten a, b und c durchgeführt werden. Vorteilhaft wird die Reaktion jedoch nach der Copolymerisation als polymeranaloge Reaktion durchgeführt.

Geeignete copolymerisierbare Vinylverbindungen (Komponente d) sind beispielsweise Styrol, 081-Methylstyrol, p-Chlorstyrol, Vinylacetat und dergleichen.

Die Erfindung betrifft auch ein Verfahren zur Herstellung eines Kunstharzes auf der Basis eines epoxidgruppenhaltigen Acrylatcopolymerisats, das dadurch gekennzeichnet ist, daß

a) 20 bis 90 Gew.-% Acrylsäurealkylester mit 1 bis 18 Kohlenstoffatomen im Alkylrest und/oder Methacrylsäureester mit 1 bis 20 Kohlenstoffatomen im Alkylrest,

b) 5 bis 40 Gew.-% eines Acrylsäurehydroxyalkylund/oder Methacrylsäurehydroxyalkylesters und

c) 5 bis 40 Gew.-% Acrylsäure- und/oder Methacrylsäureglycidylester und/oder einer anderen, eine Epoxidgruppe tragenden, olefinisch ungesättigten, polymerisierbaren Verbindung copolymerisiert werden, wobei die Summe der Komponenten a, b und c 100 % beträgt, und

- die Hydroxylgruppen der Komponente b vor oder nach Durchführung der Copolymerisation mindestens teilweise mit den freien Isocyanatgruppen eines teilblockiertem Di- und/oder Polyisocyanats mit im Mittel mindestens einer freien Isocyanatgruppe und im Mittel mindestens einer blockierten Isocyanatgruppe pro Molekül umgesetzt werden.

Die Herstellung des Acrylatcopolymerisats erfolgt nach den bekannten Polymerisationsmethoden, nämlich der Substanz-, Lösungs-, Emulsions- oder Perlpolymerisation. Die Lösungspolymerisation wird bevorzugt, insbesondere, wenn die teilverkappten Di- oder Polyisocyanate erst nach der Polymerisation angelagert werden. Die verschiedenen Polymerisationsmethoden sind gut bekannt und sind z.B. beschrieben in: Houben-Weyl, Methoden der ORGANISCHEN CHEMIE, 4. Auflage, Band 14/1, S. 24 bis 556 (1961).

Bei der Lösungspolymerisation können Lösungsmittel, wie Benzol, Toluol, Xylol, Aceton, Methylethylketon, Methylisobutylketon, Essigsäureethylester, iso-Propanol, n-Butanol, Dichlormethan, Chloroform, Tetrachlorkohlenstoff und andere eingesetzt werden.

Die Polymerisationen werden bei Temperaturen von 50 bis 170 °C durchgeführt. Die Polymerisationsreaktion wird mit den bekannten Polymerisationsinitiatoren, insbesondere mit Peroxiden und Azo-Verbindungen, gestartet. Solche Polymerisationsinitiatoren, aber auch Mischungen verschiedener Polymerisationsinitiatoren, werden in Mengen von 0,5 bis 5 Gew.-%, bezogen auf die Einwaage der Monomeren, eingesetzt.

Die Mitverwendung von Kettenüberträgern zur Regelung des Molekulargewichtes ist zweckmäßig. Diese werden in Mengen von 0,1 bis 5 Gew.-%, bezogen auf die Einwaage der Monomeren, zugegeben. Bei den Kettenüberträgern handelt es sich um Verbindungen, deren kettenregelnde Eigenschaften an sich bekannt sind. Beispielhaft seien erwähnt:

Mercaptane, wie Octylmercaptan, tert-Dodecylmercaptan, Laurylmercaptan oder Thioglykolsäureester, wie Thioglykolsäurebutylester, -hexylester, -isooctylester oder chlorierte Verbindungen, wie Dichlormethan, Trichlormethan und Tetrachlorkohlenstoff.

Die Polymerisation wird so geführt, daß das Zahlenmittel des Molekulargewichts zwischen 1000 und 30 000 liegt.

Die Umsetzung mit dem teilverkappten Di-oder Polyisocyanat erfolgt in bekannter Weise. Das Acrylatcopolymerisat liegt hierzu vorteilhaft in Lösung vor. Das teilverkappte Di- oder Polyisocyanat wird entweder in einem Lösungsmittel oder in reiner Form zugegeben. Die Reaktion wird bei 60 bis 100 °C durchgeführt. Besonders geeignet sind Reaktionstemperaturen von ca. 80 °C. Die Reaktion wird durchgeführt, bis ein Gehalt an freiem Isocyanat von weniger als 1 % erreicht ist.

Die Erfindung betrifft auch die Verwendung der beschriebenen Kunstharze sls Bindemittel in hitzehärtbaren Einbrennlacken und insbesondere in Pulverlacken.

Unter dem Begriff Pulverlacke werden pigmentierte und unpigmentierte Überzugsmittel in fester, feinteiliger Form auf der Basis organischer Kunstharze verstanden. Derartige Pulverlacke können für das elektrostatische Pulversprühverfahren verwendet werden und mittels dieses Verfahrens auf meist metallische Substrate aufgebracht werden. Eine Aufbringung in Form einer wäßrigen Suspension ('Slurry") sowie das EPC-Verfahren ("Electro-Powder-Coating"), bei dem ein geeignetes Bindemittel für das Elektrotauchverfahren als äußere Phase einer Pulversuspension dient, sind ebenfalls bekannt.

Unabhängig von der Art der Applikation wird das Pulver im Anschluß an diese durch Einbrennen zu einem auf dem Substrat haftenden Überzug gehärtet.

Die Erfindung betrifft ferner Überzugsmittel, insbesondere Pulverlacke, die als wesentliches Bindemittel ein Kunstharz auf der Basis eines epoxidgruppenhaltigen Acrylatcopolymerisats mit einer zahlenmittleren Molmasse von 1000 und 30 000 enthalten. Sie sind dadurch gekennzeichnet, daß

- das Acrylatcopolymerisat aus

a) 20 bis 90 Gew.-% Acrylsäurealkylester mit 1 bis

18 Kohlenstoffatomen im Alkylrest und/oder Methacrylsäureester mit 1 bis 20 Kohlenstoffatomen im Alkylrest,

b) 5 bis 40 Gew.-% eines Acrylsäurehydroxyalkyl- und/ oder Methacrylsäurehydroxyalkylesters und

c) 5 bis 40 Gew.-% Acrylsäure- und/oder Methacrylsäureglycidylester und/oder einer anderen, eine Epoxidgruppe tragenden, olefinisch ungesättigten, polymerisierbaren Verbindung besteht, wobei die Summe der Komponenten a, b und c 100 % beträgt, und

- die Hydroxylgruppen des Acrylatcopolymerisats vor oder nach Durchführung der Copolymerisation mindestens teilweise mit den freien Isocyanatgruppen eines teilblockiertem Di- und/oder Polyisocyanats mit im Mittel mindestens einer freien Isocyanatgruppe und im Mittel mindestens einer blockierten Isocyanatgruppe pro Molekül umgesetzt worden sind.

Das als wesentliches Bindemittel in den Überzugsmitteln und Pulverlacken enthaltene Kunstharz enthält vorteilhaft als Komponente d 0,1 - 35 Gew.-%, bezogen auf die Summe der Komponenten a, b und c, einer copolymerisierbaren Vinylverbindung.

Die erfindungsgemäßen Überzugsmittel bzw. Pulverlacke können Pigmente, Verlaufmittel, Katalysatoren, Stabilisatoren und weitere, dem Fachmann bekannte Hilfsstoffe enthalten.

Geeignete Katalysatoren für die Vernetzung, d.h. für die Umsetzung der Epoxidgruppen mit den Isocyanatgruppen sind beispielsweise tertiäre Amine, wie Trimethylamin, Triethylamin, Tetramethylbutandiamin und Triethylendiamin sowie andere Amine, wie Dimethylaminoethanol, Dimethylaminopentanol, Tris-(dimethylaminoethyl)-phenol und N-Methylmorpholin.

Außerdem können quarternäre Ammoniumsalze verwendet werden, wie Cetyltrimethyl-ammoniumbromid, Cetyltrimethyl-ammoniumchlorid, Dodecyltrimethyl-ammoniumjodid, Trimethyldocecyl-ammoniumchlorid, Benzyldimethyltetradecyl-ammoniumchlorid, Benzyldimethylpalmityl-ammoniumchlorid, Allyldodecyltrimethyl-ammoniumbromid, Benzyldimethylstearyl-ammoniumbromid, Stearyltrimethyl-ammoniumchlorid und Benzyldimethyl-tetradecyl-ammoniumacetat.

Außerdem eignen sich Imidazole, wie 2-Methylimidazol, 2-Ethylimidazol, 2-Undecylimidazol, 2-Heptadecylimida-zol, 2-Methyl-4-ethylimidazol, 1-Butylimidazol, 1-Propyl-2-methylimidazol, 1-Benzyl-2-methylimidazol, 1-Cyan-ethyl-2-methylimidazol, 1-Cyanethyl-2-undecylimidazol, 1-Cyanethyl-2-phenylimidazol, 1-(4,6-Diamino-s-triazi-nyl-2-ethyl)-2-methylimidazol, 1-(4,6-Diamino-s-triszi-nyl-2-ethyl)-2-äthylimidazol, 1-(4,6-Diamino-s-triazi-nyl-2-ethyl)-2-undecylimidazol.

Im allgemeinen wird der basische Katalysator, d.h. der die Heteroringbildung fördernde Katalysator in einer Menge von 0,01 bis 10 Gew.-%, bezogen auf das Gesamtgewicht von Polyepoxid und Polyisocyanat, zugesetzt.

Die Herstellung lösungsmittelhaltiger Überzugsmittel erfolgt mit Hilfe bekannter Dispergiermaschinen unter Verwendung von Pigmenten, Verlaufsmitteln, weiteren bekannten Hilfsstoffen und Lösungsmitteln. Die Herstellung der Pulverlacke erfolgt, indem die einzelnen Bestandteile miteinander gemischt werden, die erhaltene Mischung durch Extrudieren homogenisiert und nach dem Erkalten zu einem Pulver verkleinert wird. Die Homogenisierung erfolgt vorzugsweise in einem Extruder bei Temperaturen von 80 bis 120 °C. Anstelle eines Extruders kann auch ein Kneter eingesetzt werden, jedoch wird ein Extruder bevorzugt. Unter den beschriebenen Bedingungen erhält man eine homogene Mischung, die sich auch nach dem Abkühlen nicht mehr entmischt.

Die so gefertigten Mischungen sind spröde und können zu einem 25 bis 120 μm feinen Pulver gemahlen werden. Oegebenenfalls kann auch noch nach Korngröße gesichtet werden.

Die Erfindung betrifft weiterhin ein Verfahren zum Herstellen eines Überzuges, das dadurch gekennzeichnet ist, daß

- auf ein Substrat durch Spritzen, Fluten, Tauchen, Walzen oder Rakeln ein Überzugsmittel in Form eines Films aufgebracht wird, das als wesentliches Bindemittel ein Kunstharz auf der Basis eines epoxidgruppenhaltigen Acrylatcopolymerisats mit einer zahlenmittleren Molmasse von 1000 bis 30 000 enthält, das aus

a) 20 bis 80 Gew.-% Acrylsäurealkylester mit 1 bis 18 Kohlenstoffatomen im Alkylrest und/oder Methacrylsäureester mit 1 bis 20 Kohlenstoffatomen im Alkylrest

b) 5 bis 40 Gew-% eines Acrylsäurehydroxyalkyl- und/ oder Methacrylsäurehydroxyalkylesters und

c) 5 bis 40 Gew.-% Acrylsäure- und/oder Methacrylsäureglycidylester und/oder einer anderen, eine Epoxidgruppe tragenden, olefinisch ungesättigten, polymerisierbaren Verbindung besteht, wobei die Summe der Komponenten a, b und c 100 % beträgt und die Hydroxylgruppen des Acrylatcopolymerisats vor oder nach Durchführung der Copolymerisation mindestens teilweise mit den freien Isocyanatgruppen eines teilblockierten Di- und/oder Polyisocyanat mit im Mittel mindestens einer freien Isocyanatgruppe und im Mittel mindestens einer blockierten Isocyanatgruppe pro Molekül umgesetzt worden sind

- und der Film zu einem festhaftenden Überzug eingebrannt wird.

Weiterhin betrifft die Erfindung ein Verfahren zum Herstellen eines Überzuges, das dadurch gekennzeichnet ist, daß auf ein Substrat ein Pulverlack, der als wesentliches Bindemittel ein Kunstharz auf der Basis eines epoxidgruppenhaltigen Acrylatpolymerisats mit einer zahlenmittleren Molmasse von 1000 bis 30 000 enthält, das aus

a) 20 bis 90 Gew.-% Acrylsäurealkylester mit 1 bis 18 Kohlenstoffatomen im Alkylrest und/oder Methacrylsäureester mit 1 bis 20 Kohlenstoffatomen im Alkylrest,

b) 5 bis 40 Gew.-% eines Acrylsäurehydroxyalkyl- und/ oder Methacrylsäurehydroxyalkylesters und

c) 5 bis 40 0ew.-% Acrylsäure- und/oder Methacrylsäureglycidylester und/oder einer anderen, eine Epoxidgruppe tragenden, olefinisch ungesättigten, polymerisierbaren Verbindung besteht, wobei die Summe der Komponenten a, b und c 100 % beträgt und dessen Hydroxylgruppen vor oder nach Durchführung der Copolymerisation mindestens teilweise mit den freien Isocyanatgruppen eines teilblockierten Di- und/oder Polyisocyanats mit im Mittel mindestens einer freien Isocyanatgruppe und im Mittel mindestens einer blockierten Isocyanatgruppe pro Molekül umgesetzt worden sind, nach dem elektrostatischen Pulversprühverfahren aufgebracht wird und zu einem festhaftenden Überzug eingebrannt wird.

Die Erfindung betrifft auch einen mit einem Überzug beschichteten Gegenstand, der dadurch gekennzeichnet ist, daß der Überzug durch Aufbringen und anschließendes Einbrennen eines Überzugsmittels erhalten worden ist, das als wesentliches Bindemittel ein Acrylatcopolymerisat mit einer zahlenmittleren Molmasse von 1000 bis 30 000 erhält, das aus

a) 20 bis 90 0ew.-% Acrylsäurealkylester mit 1 bis 18 Kohlenstoffatomen im Alkylrest und/oder Methacrylsäureester mit 1 bis 20 Kohlenstoffatomén im Alkylrest,

b) 5 bis 40 Gew.-% eines Acrylsäurehydroxyalkyl- und/ oder Methacrylsäurehydroxyalkylesters und

c) 5 bis 40 Gew.-% Acrylsäure- und/oder Methscrylsäureglycidylester und/oder einer anderen, eine Epoxidgruppe tragenden, olefinisch ungesättigten, polymerisierbaren Verbindung besteht, wobei die Summe der Komponenten a, b und c 100 % beträgt und dessen Hydroxylgruppen vor oder nach Durchführung der Copolymerisation mindestens teilweise mit den freien Isocyanatgruppen eines teilblockierten Di- und/oder Polyisocyanats mit im Mittel mindestens einer freien Isocyanatgruppe und im Mittel mindestens einer blockierten Isocyanatgruppe pro Molekül umgesetzt worden sind.

Im folgenden wird die Erfindung anhand von Beispielen näher erläutert.

**Beispiel 1:**

Darstellung eines halbblockierten aromatischen Polyiso cyanats.

In einem trockenen 4-1-Glasreaktionsgefäß werdén unter Stickstoff 1966 g Toluylendiisocyanat vorgelegt. Langsam werden 1469 g Acetessigsäureethylester zugegeben. Die Temperatur darf hierbei 80° C nicht übersteigen. Nach Beendigung der Zugabe läßt man so lange nachreagieren, bis ein Isocyanatäquivalentgewicht von 304 erreicht ist.

**Beispiel 2**

Darstellung eines halbblockierten aliphatischen Polyisocyanats.

In einem trockenen 4-1-Glasreaktionsgefäß werden unte Stickstoff 2553 g Isophorondiisocyanat vorgelegt. Man erwärmt auf 70° C und läßt zu der Vorlage langsam 1000 g Methylethylketoxim zutropfen, die Temperatur soll hierbei 80°C nicht übersteigen. Nach Ende der Zugabe läßt man noch so lange nachreagieren, bis Isocyanatäquivalentgewicht von 310 erreicht ist.

**Beispiel 3**

Herstellung eines hydroxylgruppenhaltigen Copolymerisats.

In einem 6-1-Kolben werden unter Stickstoff 400 g Toluol auf 110° C erhitzt. Innerhalb von 4,5 Stunden wird eine Mischung aus 1000 g Methylmethacrylat, 200 g Glycidylmethacrylat, 182 g 2-Hydroxypropylacrylat, 3 g Ethylhexylmethacrylat, 300 g iso-Butylmethacrylat 20 g Dodecylmercaptan und 100 g tert-Butylperoctoat zugetropft. Der Ansatz wird bis zum Erreichen einer konstanten Viskosität von 1,7 dPa.s in 40 %iger Xylol-Lösung nachpolymerisiert. Danach wird die Temperatur auf 80° C erniedrigt und 425 g des Reaktionsproduktes aus Beispiel 1 werden zugegeben. Man führt die Reaktion durch, bis der Gehalt an freiem Isocyanat unter 1 % beträgt. Darauf zieht man im Vakuum bei 120° C das Lösungsmittel ab. Die erhaltene Schmelze wird auf ein Blech gegossen. Nach dem Erkalten wird das Harz in einer Schlagkreuzmühle gemahlen. Das zahlenmittlere Molekulargewicht, gemessen durch Gelpermeationschromatographie gegen Polystyroleichung beträgt 2100. Das Harz ist bei 50° C mindestens 5 Stunden bzw. bei 40° C mindestens 24 Stunden blockfest.

**Beispiel 4**

Herstellung eines Copolymerisats mit blockierten Isocyanatgruppen.

560 g Toluol werden unter Stickstoff in einem 6-l-Kolben vorgelegt und auf Rückflußtemperatur erhitzt. Innerhalb von 5 Stunden wird die Monomerenmischung aus 1400 g Methylmethacrylat, 280 g Glycidylmethacrylat, 835 g des Umsetzungsprodukts aus Hydroxyethylacrylat und des in Beispiel 2 beschriebenen teilblockierten Polyisocyanats und 840 g Ethylhexylmethacrylat mit 14 g Dodecylmercaptan zugetropft. Gleichzeitig werden 140 g tert-Butylperoctoat zudosiert. Anschließend wird bis zum Erreichen einer konstanten Viskosität von 5,3 dPa.s, 50 %ig in Xylol, nachpolymerisiert. Danach werden 10 g Dodecyltrimethyl-ammoniumjodid als Vernetzungskatalysator zugegeben. Das Harz wird wie oben aufgearbeitet. Das zahlenmittlere Molekulargewicht gemessen durch Gelpermeationschromatografie gegen Polystyroleichung beträgt 2700. Das Harz ist bei 50 C über 5 Stunden und bei 40° C über 24 Stunden blockfest.

Aus dem in der Schlagkreuzmühle zerkleinerten Pulver wird der Anteil zwischen 30 und 120 μm herausgesiebt. Das erhaltene Pulver wird mit einem 100 μm-Sieb auf Glasplatten in einer Schichtdicke von ca. 75 μ gesiebt. Die Platten werden 25 Minuten bei 185° C eingebrannt. Man erhält einen völlig porenfreien, gut verlaufenden, glänzenden Überzug.

**Beispiel 5**

100 g Harz aus dem Beispiel 3, 1 g Diazobicyclooctan und 63 g Titandioxid (Rutil-Typ) werden in einem Kneter bei 110° C aufgeschmolzen, homogenisiert und auf ein kaltes Blech aufgetragen. Die Mischung wird in einer Schlagkreutzmühle zerkleinert, und der Anteil zwischen 30 und 120 μ wird herausgesiebt.

Dieser Pulveranteil wird danach mit einem 100-μ-Sieb in einer Scvhichtdicke von ca. 75 μ auf Glasplatten gesiebt. Die Beschichtung wird 20 Minuten lang bei 180° eingebrannt. Es resultieren hochglänsende, rein weiße Überzüge.

**Patentansprüche**

Kunstharz auf der Basis eines epoxidgruppenhaltigen Acrylatcopolymerisats mit einer zahlenmittleren Molmasse von 1 000 bis 30 000, dadurch gekennzeichnet, daß
- das Acrylatcopolymerisat aus
a) 20 bis 90 Gew.-% Acrylsäurealkylester mit 1 bis 18 Kohlenstoffatomen im Alkylrest und/oder Methacrylsäureester mit 1 bis 20 Kohlenstoffatomen im Alkylrest,
b) 5 bis 40 Gew.-% eines Acrylsäurehydroxyalkyl- und/oder Methacrylsäurehydroxyalkylesters und
c) 5 bis 40 Gew.-% Acrylsäure- und/oder Methacrylsäureglycidylester und/oder einer anderen, eine Epoxidgruppe tragenden, olefinisch ungesättigten, polymerisierbaren Verbindung besteht, wobei die Summe der Komponenten a, b und c 100 % beträgt, und
- die Hydroxylgruppen des Acrylatcopolymerisats vor oder nach Durchführung der Copolymerisation mindestens teilweise mit den freien Isocyanatgruppen eines teilblockierten Di- und/oder Polyisocyanats mit im Mittel mindestens einer freien Isocyanat- und im Mittel mindestens einer blockierten Isocyanatgruppe pro Molekül umgesetzt worden sind.

2. Kunstharz nach Anspruch 1, dadurch gekennzeichnet, daß das Acrylatcopolymerisat als Komponente d 0,1 bis 35 Gew.-%, bezogen auf die Summe der Komponenten a, b und c, einer copolymerisierbaren Vinylverbindung enthält.

3. Verfahren zur Herstellung eines Kunstharzes auf der Basis eines epoxidgruppenhaltigen Acrylatpolymerisats, dadurch gekennzeichnet, daß
a) 20 bis 90 Gew.-% Acrylsäurealkylester mit 1 bis 18 Kohlenstoffatomen im Alkylrest und/oder Methacrylsäureester mit 1 bis 20 Kohlenstoffatomen im Alkylrest,
b) 5 bis 40 Gew.-% eines Acrylsäurehydroxyalkylund/oder Methacrylsäurehydroxylalkylesters und
c) 5 bis 40 Gew.-% Acrylsäure- und/oder Methacrylsäureglycidylester und/oder einer anderen, eine Epoxidgruppe tragenden, olefinisch ungesättigten, polymerisierbaren Verbindung copolymerisiert werden, wobei die Summe der Komponenten a, b und c 100 % beträgt, und
die Hydroxylgruppen der Komponente b vor oder nach Durchführung der Copolymerisation mindestens teilweise mit den freien Isocyanatgruppen eines teilblockierten Di-

und/oder Polyisocyanats mit im Mittel mindestens einer freien Isocyanatgruppe und im Mittel mindestens einer blockierten Isocyanatgruppe pro Molekül umgesetzt werden.

4. Verfahren nach Anspruch 3, dadurch gekennzeichnet, daß bei der Copolymerisation als Komponente d 0,1 bis 35 Gew.-%, bezogen auf die Summe der Komponenten a, b und c, einer copolymerisierbaren Vinylverbindung verwendet werden.

5. Verwendung des Kunstharzes nach Anspruch 1 oder 2 als Bindemittel in hitzehärtbaren Einbrennlacken.

6. Verwendung des Kunatharzes nach Anspruch 1 oder 2 als Bindemittel in Pulverlacken.

7. Überzugsmittel, enthaltend als wesentliches Bindemittel ein Kunstharz auf der Basis eines epoxidgruppenhaltigen Acrylatcopolymerisats mit einer zahlenmittleren Molmasse von 1 000 bis 30 000, dadurch gekennzeichnet, daß das Acrylatcopolymerisat aus

a) 20 bis 90 Gew.-% Acrylsäurealkylester mit 1 bis 18 Kohlenstoffatomen im Alkylrest und/oder Methacrylsäureester mit 1 bis 20 Kohlenstoffatomen im Alkylrest,

b) 5 bis 40 Gew.-% eines Acrylsäurehydroxalkyl- und/oder Methacrylsäurehydroxyalkylesters und

c) 5 bis 40 Gew.-% Acrylsäure- und/oder Methcrylsäureglycidylester und/oder einer anderen, eine Epoxidgruppe tragend, olefinisch ungesättigten, polymeriserbaren Verbindungen besteht, wobei die Summe der Komponenten a, b und c 100% beträgt, und die Hydroxylgruppen des Acrylatcopolymerisats vor oder nach Durchführung der Copolymerisation mindestens teilweise mit den freien Isocyanatgruppen eines teilblockierten Di- und/oder Polyisocyanats mit im Mittel mindestens einer freien Isocyanatgruppe und im Mittel mindestens einer blockierten Isocyanatgruppe pro Molekül umgesetzt worden sind.

8. Überzugsmittel nach Anspruch 7, dadurch gekennzeichnet, daß das Acrylatcopolymerisat als Komponente d 0,1 bis 35 Gew.-%, bezogen auf die Summe der Komponenten a, b und c, einer copolymerisierbaren Vinylverbindung enthält.

9. Pulverlack, enthaltend als wesentliches Bindemittel ein Kunstharz auf der Basis eines epoxidgruppenhaltigen Acrylatcopolymerisats mit einer zahlenmittleren Molmasse von 1 000 bis 30 000, dadurch gekennzeichnet, daß

- das Acrylatcopolymerisat aus

a) 20 bis 90 Gew.-% Acrylsäurealkylester mit 1 bis 18 Kohlenstoffatomen im Alkylrest und/oder Methacrylsäureester mit 1 bis 20 Kohlenstoffatomen im Alkylrest,

b) 5 bis 40 Gew.-% eines Acrylsäurehydroxyalkylund/oder Methacrylsäurehydroxyalkylesters und

c) 5 bis 40 Gew.-% Acrylsäure- und/oder Methacrylsäureglycidylester und/oder einer anderen, eine Epoxidgruppe tragenden, olefinisch ungesättigten, polymeriserbaren Verbindungen besteht, wobei die Summe der Komponenten a, b und c 100% beträgt, und

- die Hydroxylgruppen des Acrylatcopolymerisats vor oder nach Durchführung der Copolymerisation mindestens teilweise mit den freien Isocyanatgruppen eines teilblockierten Di- und/oder Polyisocyanats mit im Mittel mindestens einer freien Isocyanatgruppe und im Mittel mindestens einer blockierten Isocyanatgruppe pro Molekül umgesetzt worden sind.

10. Pulverlack nach Anspruch 9, dadurch gekennzeichnet, daß das Acrylatcopolymerisat als Komponente d 0,1 bis 35 Gew.-%, bezogen auf die Summe der Komponenten a, b und c, einer copolymerisierbaren Vinylverbindung enthält.

11. Verfahren zum Herstellen eines Überzuges, dadurch gekennzeichnet, daß

-auf ein Substrat durch Spritzen, Fluten, Tauchen, Walzen oder Rakeln ein Überzugsmittel in Form eines Films aufgebracht wird, das als wesentliches Bindemittel ein Kunstharz auf der Basis eines epoxidgruppenhaltigen Acrylatcopolymerisats mit einer zahlenmittleren Molmasse von 1000 bis 30 000 enthält, das aus

a) 20 bis 90 Gew.-% Acrylsäurealkylester mit 1 bis 18 Kohlenstoffatomen im Alkylrest und/oder Methacrylsäureester mit 1 bis 20 Kohlenstoffatomen im Alkylrest,

b) 5 bis 40 Gew.-% eines Acrylsäurehydroxyalkyl- und/oder Methacrylsäurehydroxyalkylesters und

c) 5 bis 40 Gew.-% Acrylsäure- und/oder Methacrylsäureglycidylester und/oder einer anderen, eine Epoxidgruppe tragenden, olefinisch ungesättigten, polymerisierbaren Verbindung besteht, wobei die Summe der Komponenten a, b und c 100 % beträgt, und die Hydroxylgruppen des Acrylatcopolymerisats vor oder nach Durchführung der Copolymerisation mindestens teilweise mit den freien Isocyanatgruppen eines teilblockierten Di- und/ oder Polyisocyanats mit im Mittel mindestens einer freien Isocyanatgruppe und im Mittel mindestens einer blockierten Isocyanatgruppe pro Molekül umgesetzt worden sind,

-und der Film zu einem festhaftenden Überzug eingebrannt wird.

12. Verfahren nach Anspruch 11, dadurch gekennzeichnet, daß das Acrylatcopolymerisat als Komponente d 0,1 bis 25 Gew.-%, bezogen auf die Summe der Komponenten a, b und c, einer copolymerisierbaren Vinylverbindung enthält.

13. Verahren zum Herstellen eines Überzuges, dadurch gekennzeichnet, daß auf ein Substrat ein Pulverlack, der als wesentliches Bindemittel ein Kunstharz auf der Basis eines epoxidgruppenhaltigen Acrylatpolymerisats mit einer zahlenmittleren Molmasse von 1 000 bis 30 000 enthält, das aus

a) 20 bis 90 Gew.-% Acrylsäurealkylester mit 1 bis 18 Kohlenstoffatomen im Alkylrest und/oder Methacrylsäureester mit 1 bis 20 Kohlenstoffatomen im Alkylrest, b) 5 bis 40 Gew.-% eines Acrylsäurehydroxyalkyl- und/oder Methacrylsäurehydroxyalkylesters und c) 5 bis 40 Gew.-% Acrylsäure- und/oder Methacrylsäureglycidylester und/oder einer anderen, eine Epoxidgruppe tragenden, olefinisch ungesättigten, polymerisierbaren Verbindung besteht, wobei die Summe der Komponenten a, b und c 100 % beträgt, und dessen Hydroxylgruppen vor oder nach Durchführung der Copolymerisation mindestens teilweise mit den freien Isocyanatgruppen eines teilblockierten Di- und/oder Polyisocyanats mit im Mittel mindestens einer freien Isocyanatgruppe und im Mittel mindestens einer blockierten Isocyanatgruppe pro Molekül umgesetzt worden sind, nach dem elektrostatischen Pulversprühverfahren aufgebracht wird und zu einem festhaftenden Überzug eingebrannt wird.

14. Verfahren nach Anspruch 13, dadurch gekennzeichnet, daß das Acrylatcopolymerisat als Komponente d 0,1 bis 35 Gew.-%, bezogen auf die Summe der Komponenten a, b und c, einer copolymerisierbaren Vinylverbindung enthält.

15. Mit einem Überzug beschichteter Gegenstand, dadurch gekennzeichnet, daß der Überzug durch Aufbringen und anschließendes Einbrennen eines Überzugsmittels erhalten worden ist, das als wesentliches Bindemittel ein Acrylatcopolymerisat mit einer zahlenmittleren Molmasse von 1 000 bis 30 000 enthält, das aus a) 20 bis 90 Gew.-% Acrylsäurealkylester mit 1 bis 18 Kohlenstoffatomen im Alkylrest und/oder Methacrylsäureester mit 1 bis 20 Kohlenstoffatomen im Alkylrest, b) 5 bis 40 Gew.-% eines Acrylsäurehydroxyalkylund/oder Methacrylsäurehydroxyalkylesters und c) 5 bis 40 Gew.-% Acrylsäure- und/oder Methacrylsäureglycidylester und/oder einer anderen, eine Epoxidgruppe tragenden, olefinisch ungesättigten, polymerisierbaren Verbindung besteht, wobei die Summe der Komponenten a, b und c 100 % beträgt und dessen Hydroxylgruppen vor oder nach Durchführung der Copolymerisation mindestens teilweise mit den freien Isocyanatgruppen eines teilblockierten Di- und/oder Polyisocyanats mit im Mittel mindestens einer freien Isocyanatgruppe und im Mittel mindestens einer blockierten Isocyanatgruppe pro Molekül umgesetzt worden sind.

16. Gegenstand nach Anspruch 15, dadurch gekennzeichnet, daß das Acrylatcopolymerisat als Komponente d 0,1 bis 35 Gew.-%, bezogen auf die Summe der Komponenten a, b und c, einer copolymerisierbaren Vinylverbindung enthält.

**Claims**

1. A synthetic resin based on an acrylate copolymer containing epoxide groups and having a number average molecular weight of 1,000 to 30,000, in which the acrylate copolymer comprises a) 20 to 90 % by weight of an alkyl acrylate having 1 to 18 carbon atoms in the alkyl radical and/or a methacrylate having 1 to 20 carbon atoms in the alkyl radical, b) 5 to 40 % by weight of a hydroxyalkyl acrylate and/or methacrylate and c) 5 to 40 % by weight of glycidyl acrylate and/or methacrylate and/or one other olefinically unsaturated, polymerizable compound carrying an epoxide group, the total amount of components a, b and c being 100 %, and the hydroxyl groups of the acrylate copolymer have been reacted before or after the copolymerization was carried out at least partially with the free isocyanate groups of a partially blocked diisocyanate and/or polyisocyanate, and have at least one free isocyanate group and at least one blocked isocyanate group per molecule.

2. A synthetic resin as claimed in claim 1, wherein the acrylate copolymer contains as component d 0.1 to 35 % by weight, relative to the total amount of components a, b and c, of a copolymerizable vinyl compound.

3. A process for preparing a synthetic resin based on an acrylate copolymer containing epoxide groups, which comprises copolymerizing a) 20 to 90 % by weight of an alkyl acrylate having 1 to 18 carbon atoms in the alkyl radical and/or a methacrylate having 1 to 20 carbon atoms in the alkyl radical, b) 5 to 40 % by weight of a hydroxyalkyl acrylate and/or methacrylate and c) 5 to 40 % by weight of glycidyl acrylate and/or methacrylate and/or one other olefinically unsaturated polymerizable compound carrying an epoxide group, the total amount of components a, b and c being 100 %, and reacting the hydroxyl groups of component b before or after the copolymerization has been carried out at least partially with the free isocyanate groups of a partially blocked diisocyanate and/or polyisocyanate, and have at least one free isocyanate group and at least one blocked isocyanate per molecule.

4. The process as claimed in claim 3, wherein, in the copolymerization, 0.1 to 35 % by weight, relative to the total amount of components a, b and c, of a copolymerizable vinyl compound are used as component d.

5. The use of a synthetic resin as claimed in claim 1 or 2 as a binder in heat-hardenable baking finishes.

6. The use of a synthetic resim as claimed in claim 1 or 2, as a binder in powder finishes.

7. A coating agent, containing as essential binder a a synthetic resin based on an acrylate copolymer containing epoxide groups and having a number average molecular weight of 1,000 to 30,000, which comprises the acrylate copolymer which consists of a) 20 to 90 % by weight of alkyl acrylate having 1 to 18 carbon atoms in the alkyl radical and/or a methacrylate having 1 to 20 carbon atoms in the alkyl radical, b) 5 to 40 % by weight of a hydroxyalkyl acrylate and/or methacrylate and c (5 to 40 % by weight of glycidyl acrylate and/or methacrylate and/or one other olefinically unsaturated, polymerizable compound carrying an epoxide group, the total amount of components a, b and c being 100 %, and the hydroxyl groups of the acrylate copolymer have been reacted before or after the copolymerization was carried out at least partially with the free isocyanate groups of a partially blocked diisocyanate and/or polyisocyanate, and have at least one free isocyanate group and at least one blocked isocyanate group per molecule.

8. A coating agent as claimed in claim 7, wherein the acrylate copolymer contains as component d 0.1 to 35 % by weight, relative to the total amount of components a, b and c, of a copolymerizable vinyl compound.

9. A powder finish, containing as essential binder a synthetic resin based on an acrylate copolymer containing epoxide groups and having a number average molecular weight of 1,000 to 30,000, wherein the acrylate copolymer comprises a) 20 to 90 % by weight of alkyl acrylate having 1 to 18 carbon atoms in the alkyl radical and/or methacrylate having 1 to 20 carbon atoms in the alkyl radical, b) 5 to 40 % by weight of a hydroxyalkyl acrylate and/or methacrylate and c) 5 to 40 % by weight of glycidyl acrylate amd/or methacrylate and/or one other olefinically unsaturated, polymerizable compound carrying an epoxide group, the total amount of components a, b and c being 100 %, and the hydroxyl groups of the acrylate copolymer have been reacted before or after the copolymerization was carried out at least partially with the free isocyanate groups of a partially blocked diisocyanate and/or polyisocyanate, and have at least one free isocyanate group and at least one blocked isocyanate group per molecule.

10. A powder finish as claimed in claim 9, wherin the acrylate copolymer contains as component d 0.1 to 35 % by weight, relative to the total amount of components a, b and c, of a copolymerizable vinyl compound.

11. A process for preparing a surface coating, which comprises applying a coating agent in the form of a film by spraying, flow-coating, dipping, roller-coating or knife-coating to a substrate the coating agent containing as an essential binder a synthetic resin based on an acrylate copolymer containing epoxide groups, having a number average molecular weight of 1,000 to 30,000 and comprising a) 20 to 90 % by weight of an alkyl acrylate having 1 to 18 carbon atoms in the alkyl radical and/or a methacrylate having 1 to 20 carbon atoms in the alkyl radical, b) 5 to 40 % by weight of a hydroxyalkyl acrylate and/or methacrylate and c) 5 to 40 % by weight of glycidyl acrylate and/or methacrylate and/or one other olefinically unsaturated, polymerizable compound carrying an epoxide group the total amount of components a, b and c being 100 %, and the hydroxyl groups of the acrylate copolymer have been reacted before or after the copolymerization was carried out at least partially with the free isocyanate groups of a partially blocked diisocyanate and/or polyisocyanate, and have at least one free isocyanate group and at least one blocked isocyanate group per molecule, and baking the film to give a firmly adhering surface coating.

12. The process as claimed in claim 11, wherein the acrylate copolymer contains as component d 0.1 to 35 % by weight, relative to the total amount of components a, b and c, of a copolymerizable vinyl compound.

13. A process for preparing a surface coating which comprises applying to a substrate, by the electrostatic powder spray process, a powder finish which contains, as essential binder a synthetic resin based on an acrylate polymer containing epoxide groups, having a number average molecular weight of 1,000 to 30,000 and comprising a) 20 to 90 % by weight of an alkyl acrylate having 1 to 18 carbon atoms in the alkyl radical and/or a methacrylate having 1 to 20 carbon atoms in the alkyl radical, b) 5 to 40 % by weight of a hydroxyalkyl acrylate and/or methacrylate and c) 5 to 40 % by weight of glycidyl acrylate and/or methacrylate and/or one other olefimically unsaturated, polymerizable compound carrying an epoxide group, the total amount of components a, b and c being 100 %, and the hydroxyl groups of which have been reacted before or after the copolymerization was carried out at least partially with the free isocyanate groups of a partially blocked diisocyanate and/or polyisocyanate, and have at least one free isocyanate group and at least one blocked isocyanate group per molecule, and baking the applied powder finish to give a firmly adhering surface coating.

14. The process as claimed in claim 13, wherein the acrylate copolymer contains as component d 0.1 to 35 % by weight, relative to the total amount of componemts a, b and c, of a copolymerizable vinyl compoumd.

15. An article coated with a surface coating, wherein the surface coating has been obtained by applying, and subsequently baking, a coating agent which contains, as essential binder, an acrylate copolymer having a number average molecular weight of 1,000 to 30,000 and comprising a) 20 to 90 % by weight of an alkyl acrylate having 1 to 18 carbon atoms in the alkyl radical and/or a methacrylate having 1 to 20 carbon atoms in the alkyl radical, b) 5 to 10 % by weight of a hydroxyalkyl acrylate and/or methacrylate and c) 5 to 40 % by weight of glycidyl acrylate and/or methacrylate and/or one other olefinically unsaturated, polymerizable compound carrying an epoxide group, the total amount of components a, b and c being 100 %, and the hydroxyl groups of which have been reacted before or after the copolymerization was carried out at least partially with the free isocyanate groups of a partially blocked diisocyanate and/or polyisocyanate, and have at least one free isocyanate group and at least one blocked isocyanate group per molecule.

16. An article as claimed in claim 15, wherein the acrylate copolymer contains as component d 0.1 to 35 % by weight, relative to the total amount of components a, b and c, of a copolymerizable vinyl compound.

## Revendications

1.- Résine synthétique à base d'un produit de copolymérisation d'acrylate contenant des groupes époxyde, ayant une masse moléculaire moyenne en nombre de 1 000 à 30 000, caractérisée par le fait:

- que le produit de copolymérisation d'acrylate est formé de

a) 20 à 90 % en poids d'ester d'alkyle d'acide acrylique contenant 1 à 18 atomes de carbone dans le radical alkyle et/où d'ester d'acide méthacrylique contenant 1 à 20 atomes de carbone dans le radical alkyle,

b) 5 à 40 % en poids d'un ester d'hydroxyalkyle d'acide acrylique et/ou d'un ester d'hydroxyalkyle d'acide méthacrylique, et

c) 5 à 40 % en poids d'ester de glycidyle d'acide acrylique et/ou d'acide méthacrylique et/ou d'un autre composé oléfiniquement insaturé polymérisable portant un groupe époxyde, la somme des constituants a, b et c étant de 100 %, et

- que les groupes hydroxyle du produit de polymérisation d'acrylate ont été mis à réagir au moins partiellement, avant ou après la conduite de la copolymérisation, sur les groupes isocyanate libre d'un di- et/ou polyisocyanate partiellement bloqué contenant en moyenne au moins un groupe isocyanate libre et en moyenne au moins un groupe isocyanate bloqué par molécule.

2.- Résine synthétique selon la revendication 1, caractérisée par le fait que le produit de copolymérisation d'acrylate contient comme constituant d 0,1 à 35 en poids, relativement à la somme des constituants a, b, et c, d'un composé vinylique copolymérisable.

3.- Procédé pour la préparation d'une résine synthétique à base d'un produit de copolymérisation d'acrylate contenant des groupes époxyde, caractérisé par le fait que l'on copolymérise

a) 20 à 90 % en poids d'ester d'alkyle d'acide acrylique contenant 1 à 18 atomes de carbone dans le radical alkyle et/ou d'ester d'acide méthacrylique contenant 1 à 20 atomes de carbone dans le radical alkyle,

b) 5 à 40 % en poids d'un ester d'hydroxyalkyle d'acide acrylique et/ou d'un ester d'hydroxyalkyle d'acide méthacrylique, et

c) 5 à 40 % en poids d'ester de glycidyle d'acide acrylique et/ou d'acide méthacrylique et/ou d'un autre composé oléfiniquement insaturé polymérisable, la somme des constituants a, b et c étant de 100 %, et

- que les groupes hydroxyle du constituant b ont été mis à réagir au moins partiellement, avant ou après la conduite de la copolymérisation, sur les groupes isocyanate libres d'un di- et/ou polyisocyanate partiellement bloqué contenant en moyenne au moins un groupe isocyanate libre et en moyenne au moins un groupe isocyanate bioqué par molécule.

4.- Procédé selon la revendication 3, caractérisé par le fait que lors de la copolymérisation, on utilise comme constituant d 0,1 à 35 % en poids, relativement à la somme des constituants a, b et c, d'un composé vinylique copolymérisable.

5.- Utilisation de la résine synthétique selon l'une des revendication 1 et 2 comme liant dans des peintures au four thermodurcissable.

6.- Utilisation de la résine synthétique selon l'une des revendication 1 et comme liant dans des peinture en poudre.

7.- Agent de revêtement contenant comme liant essentiel une résine synthétique à base d'un produit de copolymérisation d'acrylate contenant des groupes époxyde, ayant une masse moléculaire moyenne en nombre de 1 000 à 30 000, caractérisé par le fait:

- que le produit de copolymérisation d'acrylate est formé de

a) 20 à 90 % en poids d'ester d'alkyle d'acide acrylique contenant 1 à 18 atomes de carbone dans le radical alkyle et/ou d'ester d'acide méthacrylique contenant 1 à 20 atomes de carbone dans le radical alkyle,

b) 5 à 40 % en poids d'un ester d'hydroxyalkyle d'acide acrylique et/ou d'un ester d'hydroxyalkyle d'acide méthacrylique, et

c) 5 à 40 % en poids d'ester de glycidyle d'acide acrylique et/ou d'acide méthacrylique et/ou d'un autre composé oléfiniquement insaturé polymérisable portant un groupe époxyde, la somme des constituants a, b et c étant de 100 %, et

- que les groupes hydroxyle du produit de polymérisation d'acrylate ont été mis à réagir au moins partiellement, avant ou après la conduite de la copolymérisation, sur les groupes isocyanate libres d'un di- et/ou polyisocyanate partiellement bloqué contenant en moyenne au moins un groupe isocyanate libre et en moyenne au moins un groupe isocyanate bloqué par molécule.

8.- Agent de revêtement selon la revendication 7, caractérisé par le fait que le produit de copolymérisation d'acrylate contient comme constituant d 0,1 à 35 % en poids, relativement à la somme des constituants a, b et c, d'un composé vinylique copolymérisable.

9.- Peinture en poudre contenant comme liant essentiel une résine synthétique à base d'un produit de copolymérisation d'acrylate contenant des groupes époxyde, ayant une masse molélulaire moyenne en nombre de 1 000 à 30 000, caractérusée par le fait:

-que le produit de copolymérisation d'acrylate est formé de

a) 20 à 90 % en poids d'ester d'alkyle d'acide acrylique contenant 1 à 18 atomes de carbone dans le radical alkyle et/ou d'ester d'acide méthacrylique contenant 1 à 20 atomes de carbone dans le radical alkyle

b) 5 a 40 % en poids d'un ester d'hydroxyalkyle d'acide acrylique et/ou d'un ester d'hydroxyalkyle d'acide méthacrylique, et

c) 5 à 40 % en poids d'ester de glycidyle d'acide acrylique et/ou d'acide méthacrylique et/ou d'un autre composé oléfiniquement insaturé polymérisable portant un groupe époxyde, la somme des constituants a, b et c étant de 100 %, et

- que les groupes hydroxyle du produit de polymérisation d'acrylate ont été mis à réagir au moins partiellement, avant ou après la conduite de la copolymérisation, sur les groupes isocyanate libres d'un di- et/ou polyisocyanate partiellement bloqué contenant en moyenne au moins un groupe isocyanate libre et en moyenne au moins un groupe isocyanate bloqué par molécule.

10.- Peinture selon la revendication 9, caractérisée par le fait que le produit de copolymérisation d'acrylate contient comme constituant d 0,1 à 35 % en poids, relativement à la somme des constituants a, b et c, d'un composé vinylique copolymérisable.

11.- Procédé pour la réalisation d'un revêtement, caractérisé par le fait:

- que l'on applique sur un subjectile, par pulvérisation, arrosage, immersion, au rouleau ou à la racle, un agent de revêtement sous la forme d'un feuil qui contient comme liant essentiel une résine synthétique à base d'un produit de copolymérisation d'acrylate contenant des groupes époxyde, ayant une masse moléculaire moyenne en nombre de 1 000 à 30 000, qui est formé de

a) 20 à 90 % en poids d'ester d'alkyle d'acide acrylique contenant 1 à 18 atomes de carbone dans le radicale alkyle et/ou d'ester d'acide méthacrylique contenant 1 à 20 atomes de carbone dans le radical alkyle,

b) 5 à 40 % en poids d'un ester d'hydroxyalkyle d'acide acrylique et/ou d'un ester d'hydroxyalkyle d'acide méthacrylique, et

c) 5 à 40 % en poids d'ester de glycidyle d'acide acrylique et/ou d'acide méthacrylique et/ou d'un autre composé oléfiniquement insaturé polymérisable portant un groupe époxyde, la somme des constituants a, b et c étant de 100 %, et

- que les groupes hydroxyle du produit de polymérisation d'acrylate ont été mis à réagir au moins partiellement, avant ou après la conduite de la copolymérisation, sur les groupes isocyanate libres d'un di- et/ou polyisocyanate partiellement bloqué contenant en moyenne au moins un groupe isocyanate libre et en moyenne au moins un groupe isocyanate bloqué par molécule,

- et que l'on cuit le feuil pour obtenir un revêtement fermement adhérent.

12.- Procédé selon la revendication 11, caractérisé par le fait que le produit de copolymérisation d'acrylate contient comme constituant d 0,1 à 35 % en poids, relativement à la somme des constituants a, b et c, d'un composé vinylique copolymérisable.

13.- Procédé de réalisation d'un revêtement, caractérisé par le fait que l'on applique sur un subjectile, selon le procédé électrostatique de pulvérisation de poudre, une peinture en poudre qui contient comme liant essentiel une résine synthétique ayant une masse moléculaire moyenne en nombre de 1 000 à 30 000, qui est formée de

a) 20 à 90 % en poids d'ester d'alkyle d'acide acrylique contenant 1 à 18 atomes de carbone dans le radical alkyle et/ou d'ester d'acide méthacrylique contenant 1 à 20 atomes de carbone dans le radical alkyle,

b) 5 à 40 % en poids d'un ester d'hydroxyalkyle d'acide acrylique et/ou d'un ester d'hydroxyalkyle d'acide méthacrylique, et

c) 5 à 40 % en poids d'ester de glycidyle d'acide acrylique et/ou d'acide méthacrylique et/ou d'un autre composé oléfiniquement insaturé polymérisation portant un groupe époxyde, la somme des constituants a, b et c étant de 100 %, et

- que les groupes hydroxyle du produit de polymérisation d'acrylate ont été mis à réagir au moins partiellement, avant ou après la conduite de la copolymérisation, sur les groupes isocyanate libres d'un di- et/ou polyisocyanate partiellement bloqué contenant en moyenne au moins un groupe isocyanate libre et en moyenne au moins un groupe isocyanate bloqué par molécule et qu'on la cuit pour obtenir un revêtement fermement adhérent.

14.- Procédé de réalisation selon la revendication 13, caractérisé par le fait que le produit de copolymérisation d'acrylate contient comme constituant d 0,1 à 35 % en poids, relativement à la somme des constituants a, b et c, d'un composé vinylique copolymérisable.

15.- Objet recouvert d'un revêtement, caractérisé par le fait que le revêtement a été obtenu par application et ensuite cuisson d'un agent de revêtement qui contient comme liant essentiel un produit de copolymérisation d'acrylate ayant une masse moléculaire moyenne en nombre de 1 000 à 30 000, qui est formé de

a) 20 à 90 % en poids d'ester d'alkyle d'acide acrylique contenant 1 à 18 atomes de carbone dans le radical alkyle et/ou d'ester d'acide méthacrylique contenant 1 à 20 atomes de carbone dans le radical alkyle,

b) 5 à 40 % en poids d'un ester d'hydroxyalkyle d'acide acrylique et/ou d'un ester d'hydroxyalkyle d'acide méthacrylique, et

c) 5 à 40 % en poids d'ester de glycidyle d'acide acrylique et/ou d'acide méthacrylique et/ou d'un autre composé oléfiniquement insaturé polymérisable portant un groupe

**0 071 813**

époxyde, la somme des constituants a, b et c étant de 100 %, et

- que les groupes hydroxyl du produit de polymérisation d'acrylate ont été mis à réagir au moins partiellement, avant ou après la conduite de la copolymérisation, sur le groupes isocyanate libres d'un di- et/ou polyisocyanate partiellement bloqué contenant en moyenne au moins un groupe isocyanate libre et en moyenne au moins un groupe isocyanate bloqué par molécule.

16.- Objet selon la revendication 15, caractérisé par le fait que le produit de copolymérisation d'acrylate contient comme constituant d 0,1 à 35 % en poids relativement à la somme des constituants a, b et c, d'un composé vinylique copolymérisable.